Europäisches Patentamt

European Patent Office

Office européen des brevets

(11) Publication number: **0 100 721**
**A1**

(12) **EUROPEAN PATENT APPLICATION**

(21) Application number: **83401531.5**

(22) Date of filing: **26.07.83**

(51) Int. Cl.³: **B 23 K 9/12**

(30) Priority: **02.08.82 US 404265**

(43) Date of publication of application:
**15.02.84 Bulletin 84/7**

(84) Designated Contracting States:
**CH DE FR GB IT LI SE**

(71) Applicant: **GENERAL ELECTRIC COMPANY**
**1 River Road**
**Schenectady New York 12305(US)**

(72) Inventor: **Westcott, Brian John**
**889 Crothers Memorial Hall Stanford University**
**Stanford California 94305(US)**

(72) Inventor: **Lillquist, Robert David**
**1197 Hillside Avenue**
**Schenectady New York 12309(US)**

(72) Inventor: **Lombardo, Daniel Thomas**
**1 Bellaire Drive**
**Scotia New York 12302(US)**

(74) Representative: **Catherine, Alain**
**GETSCO 42, avenue Montaigne**
**F-75008 Paris(FR)**

(54) Tri-axis seam tracker for electric arc torch position control.

(57) An apparatus and a method for seam tracking in electric arc torch welding employs an optical reflectivity altering coating (30) or treatment employed along an edge (21) to be welded on one of the two workpieces (20a, 20b) to be joined. Light, from the arc torch or a separate source (10), is directed upon the joint to be welded and detectors (12a, 12b) measure the intensity of light reflected from at least two adjacent areas on opposite sides of the seam. The arc torch is positioned so that the two measured light intensities essentially exhibit maximally-distinct values.

FIG.1

EP 0 100 721 A1

## TRI-AXIS SEAM TRACKER FOR ELECTRIC ARC
## TORCH POSITION CONTROL

The present invention relates to electric are torch welding and, more particularly, to methods and devices for automated weld seam tracking.

In arc welding processes, it is desirable to be able to move the electric arc welding torch along the seam to be welded. Furthermore, it is desirable that this be done automatically by the arc welding system. At present, most automated welding processes are limited to spot welding operations. However, continued development of automated welding processes, particularly those processes carried out by general purpose manufacturing robots, require certain feedback control structures and, in particular, structures which indicate the lateral position of the torch arm relative to the seam to be welded and the distance from the arc torch electrode to the weld piece. In certain situations, seam tracking movements can be programmed into the welding system for predetermined seam position, curvature and dimension. However, it is much more desirable to be able to provide an electric arc torch welding system with means for automatically tracking the torch arm along any seam to be welded. It is further desired that this process occur continuously and automatically and that it be essentially undisturbed by the specific shape of the seam being welded.

In particular, in automated welding, it is necessary to control the path of the welding arm so that the weld puddle remains centered on the weld seam. Moreover, although the general configuration of the seam in repetitive jobs can be programmed, fit variations from part to part are often sufficient to cause substantial deviations of the weld path from individual seams, potentially resulting in poor welds. Accordingly, sensors are highly desirable which can determine the relative position of the weld seam, thereby providing a control signal which can be used to center the welding torch. It is further desirable that the positionning be accurate to several mils, have a time response on the order of seconds or faster, sense the relative seam position as close to the weld puddle as possible, and operate from a working distance of several inches from the weld. Furthermore, the seam tracking device should work reliably in many different weld geometries and positions and be small, light and economical.

Several different forms of seam tracking apparatus have already been applied to guide automated and robotic welding devices. Among these devices are the mechanical contact type, such as "Cecil gauges", electromagnetic and electrostatic sensors, television viewers with signal processing electronics, and optical sensors using laser sources. Furthermore, sensors based upon the variation of arc parameters as the arc is zigzagged slightly accross the seam have also been employed. Several of these methods and devices for their practice may be found in U.S. patents. Such patents include U.S. 4,302,655, 4,316,075, and 4,316,076. However, each of these previously-described devices and methods for seam tracking fail to satisfy one or more of the above-mentionned criteria which are found to be desirable in seam tracking equipment. In particular, many of them lack the simplicity and economy provided by the present invention in its solution to the seam tracking problem.

Other work in the seam tracking field has been reported in a progress report titled "Improvement of Reliability of Welding by In-Process Sensing and Control (Development of Smart Welding Machines For Girth Welding of Pipes)"submitted to the Department of Energy, June, 1981 by José Converti et al. This report describes initial experiments conducted using contact sensors (thermocouples) to probe the temperature distribution near the weld puddle seam. In particular, Converti et al. propose using a simple optical filter to reduce the radiation from the plasma arc through the use of materials similar to conventional welders' goggles. Still other schema for seam tracking employ various forms of sensors and detectors including electromagnetic sensors, inductive sensors, contact sensors, capacitive sensors, arc parameter sensors and optical sensors. Each of these sensors has applications on partricular forms of joints to be welded, but no one sensor is universally applicable to all forms of joints to be welded. In particular, the performance of quality welding requires that the welding torch be maintained in precise position over the area where the two pieces of metal are to be joined. This weld seam area can possess a variety of geometries including not only the conventional butt joint, but also lap joints and V-groove joints.

In accordance with a preferred embodiment of the present invention, a method for seam tracking in electrical arc welding comprises disposing an optical reflectivity altering coating along one edge of a seam to be welded, placing the two workpieces to be welded in abutting contact along the seam, directing light onto the seam, measuring the intensity of light reflected from the seam from at least one area on each side of the seam and positioning an electric arc torch so that the measured light intensity essentially exhibits maximally distinct values. Alternatively, the optical reflectivity alteration along one side of the seam may be effected by surface treatments such as grinding, scoring or polishing.

In accordance with another embodiment of the present invention, an apparatus for tracking a seam comprises a supporting base member having a light source mounted thereon for directing light onto the seam and at least two light-detecting means mounted on the base assembly for measuring light reflected from at least two adjacent areas on opposite sides of the seam. In accordance with one particular embodiment of this apparatus, the light source comprises the electric arc torch itself to which the supporting base member is preferably attached.

Accordingly, it is an object of the present invention to provide a method for seam tracking along complicated welding seam paths.

It is a further object of the present invention to provide a method for seam tracking along a variety of weld joint types.

It is also an object of the present invention to provide an apparatus for automatic seam tracking along complicated weld seam paths for a variety of different weld joints.

Lastly, it is an object of the present invention to provide a three-axis seam tracker for an arc torch welding apparatus which operates to generate electrical signals related to the position of the arc torch along and above the weld seam.

The subject matter which is regarded as the invention is particularly pointed out and distinctly claimed in the concluding portion of the specification. The invention, however, both as to organization and method of practice, together with further objects and advantages thereof, may best be understood by reference to the following description taken in connection with the accompanying drawings in which:

Figure 1 is an isometric view illustrating one embodiment of the present invention in which a distinct light source is provided; and

Figure 2 is an isometric view illustrating an embodiment of the present invention in which light is supplied by the electric arc torch itself.

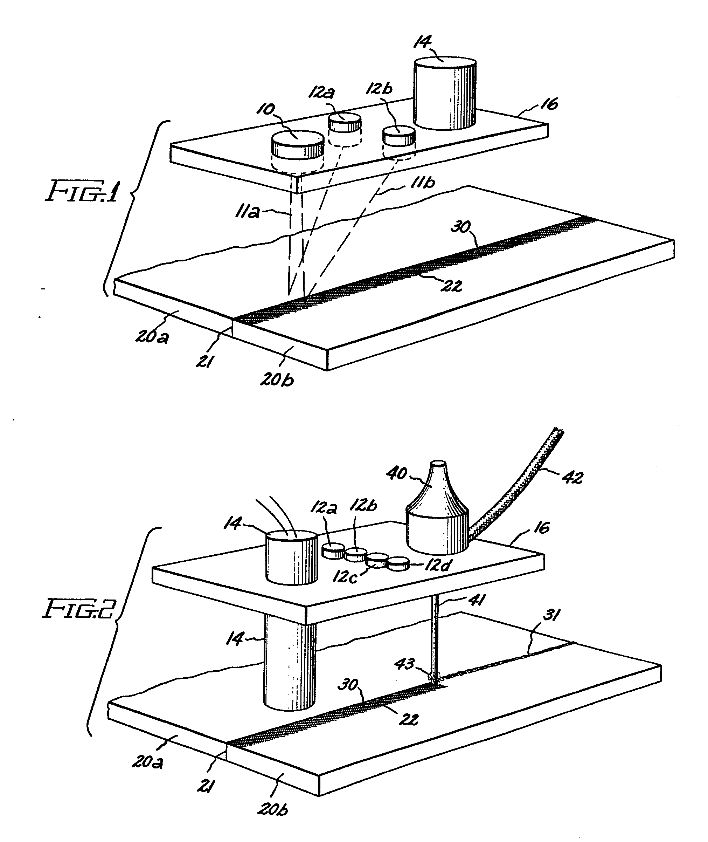

Figure 1 illustrates one possible configuration of the present invention. In particular, butt joint 21 is the seam to be welded. While seam 21 is shown herein as lying along a straight path, it should be appreciated that the Figures herein depict closeup views which are provided to more clearly indicate the operation of the present apparatus and method. Thus, while seam 21 is shown as a straight path between adjoining workpieces 20a and 20b, it should, nonetheless, be appreciated that the segment shown is only a small part of a potentially much larger workpiece.

A central feature of the present invention is the providing of alteration of the optical reflectivity properties along one edge of a seam to be welded such as by disposing reflective coating 30 as a strip on workpiece 20b along the seam to be joined. The choice of material to employ for coating strip 30 is very important for the proper practice of the present invention. In particular, the substance preferably has a low melting temperature, with rapide decomposition characteristics which will not leave a residue that could metallurgically degrade the quality of the weld. Such a substance may comprise, for example, crayon wax, dye such as that from a permanent marker, or a chemical such as polyoxymethylene. The reflectivity altering coating or treatment is usually employed on only one of the two pieces of metal to be welded along the weld seam. A central feature of the present invention is that the reflectivity characteristic of one side of the weld seam is altered so as to optically distinguish the two sides of the seam. This permits the use of optical detection means to center the arc torch along the seam and to precisely control its movement along complicated and variable seam patterns. Of course, it is possible to treat both sides of the seam with different coatings or processes to further assure maximum reflectivity distinctness.

Figure 1 further illustrates an apparatus for taking advantage of the presence of strip 30, having distinct optical reflectivity characteristics, to provide controle signals for seam tracking. In particular, in the embodiment illustrated, light source 10 is disposed on base supporting member 16 which preferably comprises a metal block. Light source 10 directs light rays 11a and 11b onto seam 21, so that light therefrom falls upon adjacent areas on opposite sides of seam 21. Light detectors 12a and 12b are also preferably mounted on base member 16 and disposed so as to receive light reflected from adjacent areas on opposite sides of seam 21 from rays 11a and 11b, respectively. The output from these light detectors may be employed in a control circuit which positions the arc torch in such a way so as to essentially maximize the difference between these two signals. Of course, strip 30 must be sufficiently wide so that there is no problem associated with the device tracking along line 22 which would constitute a false seam. It is also noted that light detectors 12a and 12b are preferably mounted in recessed portions of base 16 so as to limit their fields of view to desired portions of the weld seam area. Furthermore, in the embodiment of the invention shown, it is also desirable to employ proximity transducer 14, also mounted on base 16, to provide a signal indicative of the distance of base member 16 or the arc torch from the weld seam. In particular, proximity detector 14 may comprise a device such as a linear variable displacement transducer (LVDT), or an electrical or air jet proximity transducer. Thus, in the apparatus shown in Figure 1, a three-axis seam tracker is provided, with two-dimensional tracking being provided along the weld seam itself.

Figure 2 illustrates another embodiment of the present invention in which arc torch 40 is itself mounted on base member 16. Arc torch 40, holding electrode rod 41, is connected to a source of electrical power through insulated conductive lead 42. Light for driving the apparatus of the embodiment shown is produced by arc 43 as rod 41 is moved along seam 21, forming welded joint portion 31. Furthermore, Figure 2 illustrates the presence of a plurality of light detectors 12a, 12b, 12c, 12d, which, as in the embodiment shown in Figure 1, may comprise devices such as photodiodes or phototransistors. In Figure 2, four such detectors are shown for increased resolution and a greater sensitivity in seam tracking.

From the above it may be appreciated that the above-described invention provides a method and an apparatus for seam tracking in electrical arc welding which is economical yet capable of tracking complex seam paths and useful in a variety of joint geometries.

CLAIMS

1. A method for seam tracking in electric arc torch welding comprising:

providing a distinct optically reflective strip alongside the edge to be welded on at least one of the two workpieces to be joined;

placing the two workpieces in abutting contact along the seam to be welded;

directing light onto said seam,

measuring the intensity of light reflected from said seam from at least one area on each side of said seam, said areas being adjacent; and

positioning an electric arc torch welder so that said measured light intensity essentially exhibits maximally distinct values.

2. The method of claim 1 in which said light is provided by said arc torch.

3. The method of claim 1 in which said light is measured by photodiodes.

4. The method of claim 1 in which said light is measured by phototransistors.

5. The method of claim 1 in which said optically-reflective strip comprises a coating selected from the group consisting of wax, dye, and polyoxymethylene.

6. The method of claim 1 in which said strip is provided by surface treatment.

7. The method of claim 1 in which distinct optically-reflective strips are disposed alongside both of said edges to be welded.

8. An apparatus for tracking a seam, said apparatus being for use with an electric arc torch welder, said apparatus comprising :

a supporting base member;

a light source means mounted on said base member for directing light onto said seam ; and

at least two light-detecting means mounted on said base member for measuring light reflected from at least two adjacent areas on opposite sides of said seam.

9. The apparatus of claim 8 in which said base member is mounted on said arc torch.

10. The apparatus of claim 9 in which said arc torch also comprises said light source.

11. The apparatus of claim 8 further including means to sense the distance of said base member from said seam.

12. The apparatus of claim 8 in which said light-detecting means are mounted in recesses in said base member so as to limit the field of view of said light-detecting means.

13. The apparatus of claim 8 further including means to move said arc torch in response to signals from said light-detecting means.

FIG.1

FIG.2

0100721

European Patent Office

**EUROPEAN SEARCH REPORT**

Application number

| | DOCUMENTS CONSIDERED TO BE RELEVANT | | EP 83401531.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | DE - A - 2 164 397 (MITSUBISHI)<br>* Totality *<br>-- | 1 | B 23 K 9/12 |
| X | DE - B1 - 2 434 126 (MANNES MANNROHREN-WERKE)<br>* Column 2, lines 12-17 *<br>-- | 1 | |
| A | DD - A - 126 491 (GÖTTERT)<br>* Page 4, lines 1-14; fig. 1,3 *<br>-- | 4,12 | |
| A | US - A - 3 299 250 (VILKAS)<br>* Column 2, lines 48-66; fig. 1,2 *<br>-- | 2,3 | |
| | | | TECHNICAL FIELDS SEARCHED (Int. Cl. ³) |
| A | US - A - 3 855 446 (KOTOVA)<br>* Column 3, line 64 - column 9, line 11; fig. 1 *<br>---- | 1,8-10,13 | B 23 K 9/00 |

The present search report has been drawn up for all claims

| Place of search | Date of completion of the search | Examiner |
|---|---|---|
| VIENNA | 17-10-1983 | BENCZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82